# EUROPEAN PATENT SPECIFICATION

(11) **EP 3 536 945 B1**
(45) Date of publication and mention of the grant of the patent: **14.09.2022**
(21) Application number: 19161057.5
(22) Date of filing: 06.03.2019
(51) Int. Cl.: F02M 61/14, G06K 19/06, F02D 41/24, F02D 9/10

(54) **FUEL INJECTOR AND METHOD OF ORIENTING AN OUTLET OF THE SAME**
KRAFTSTOFFINJEKTOR UND VERFAHREN ZUR AUSRICHTUNG EINES AUSGANGS DAVON
INJECTEUR DE CARBURANT ET PROCÉDÉ D'ORIENTATION DE SA SORTIE

(30) Priority: 08.03.2018 US 201815915215
(43) Date of publication of application: 11.09.2019
(73) Proprietor: Delphi Technologies IP Limited, Saint Michael (BB)
(72) Inventor: RIVERA, Jordan A., FAIRPORT, NEW YORK 14450 (US); STRAUSS, Thomas J., SPENCERPORT, NEW YORK 14599 (US); ROWLEY, Eric S., WEBSTER, NEW YORK 14580 (US)
(74) Representative: Keltie LLP

(56) References cited:
- WO-A1-97/20136
- GB-A- 2 425 571
- JP-A- S6 487 869
- JP-A- 2006 351 682
- US-A1- 2006 209 150
- US-A1- 2015 211 462

## Description

### TECHNICAL FIELD OF INVENTION

The present invention relates to a fuel injector for supplying fuel to a fuel consuming device and more particularly to a feature and method for orienting an outlet of the fuel injector.

### BACKGROUND OF INVENTION

Modern internal combustion engines typically utilize one or more fuel injectors for metering a precise quantity of fuel to be combusted in respective combustion chambers such that the combustion is initiated with a spark from a spark plug or through compression ignition. Combustion of the fuel may be used, for example, to propel a motor vehicle and to generated electricity or drive other accessories in support of operation of the motor vehicle. Fuels in liquid form that are commonly used to power the internal combustion engine include gasoline, alcohol, ethanol, diesel fuel and the like, and blends thereof. Until more recently, fuel injectors commonly referred to as port fuel injectors were predominantly used. Port fuel injectors inject fuel into a port of an intake manifold where the fuel is mixed with air prior to being drawn into the combustion chamber of the internal combustion through an intake valve of the cylinder head. A typical port fuel injector is show in United States Patent No. 7,252,249 to Molnar.

In order to increase fuel economy and reduce undesirable emissions produced by combustion of the fuel, direct injection fuel injectors have been increasing in use. As the name suggests, direct injection fuel injectors inject fuel directly into the combustion chamber as described in JPS6487869A and in WO97/20136A1. United States Patent No. 8,453,951 to Perry et al. shows a direct injection fuel injector which includes a nozzle tip, hereinafter referred to as outlet body, with individual holes which are sized and shaped to allow a precise amount of fuel therethrough. When such an arrangement is used, it may be desirable to orient the outlet body in the combustion chamber in a predetermined orientation in order for the resulting spray pattern/shape to be oriented in a way that is most beneficial to combustion of the fuel. Furthermore, orientation of the outlet body in the combustion chamber may be determined by the interaction of geometries of a fuel injector body and the internal combustion engine where the fuel injector body is located outside of the combustion chamber. Consequently, in order to ensure proper orientation of the outlet body within the combustion chamber, the fuel injector must be manufactured to ensure that the outlet body is properly oriented with respect to the fuel injector body. It is known to machine a feature on the outlet body which is subsequently used only to align the feature with a complementary feature of the fuel injector body in order to ensure proper orientation between the outlet body and the fuel injector body, and consequently, ensure proper orientation of the outlet body in the combustion chamber when the fuel injector is installed on the internal combustion engine. However, machining the feature on the outlet body adds time to the manufacturing process since the machined feature is only used to align the outlet body with the fuel injector body. Furthermore, tool life is decreased if the same tool that is used to machine the feature on the outlet body is also used to machine other features.

What is needed is a fuel injector and method of manufacturing the fuel injector which minimizes or eliminates one or more of the shortcomings set forth above.

### SUMMARY OF THE INVENTION

Briefly described, a fuel injector for supplying fuel to a fuel consuming device includes a fuel inlet which communicates fuel into the fuel injector; a fuel injector body; an outlet body having an upstream surface, a downstream surface, and an outlet aperture fluidly connecting the upstream surface to the downstream surface; and a valve assembly downstream of the fuel inlet and upstream of the outlet aperture such that the valve assembly includes a valve member which is moveable along an axis between 1) a closed position in which fluid communication is prevented from the fuel inlet to the outlet aperture and 2) an open position in which fluid communication is provided from the fuel inlet to the outlet aperture. The outlet body includes a 2-dimensional matrix of cells on the downstream surface, the 2-dimensional matrix of cells comprising a finder pattern; a timing pattern; and a field of unpopulated and populated cells which represent bits of data. In a further aspect, an imaginary ray extending outward from the axis bisects the finder pattern.

A method of manufacturing the foregoing fuel injector is provided where the method may include using the 2-dimensional matrix of cells to orient the outlet body relative to the fuel injector body. The invention is set out in the appended set of claims.

### BRIEF DESCRIPTION OF DRAWINGS

This invention will be further described with reference to the accompanying drawings in which:
FIG. 1 is an axial cross-sectional view of a fuel injector in accordance with the present invention;
FIG. 2 is an enlargement of a portion of FIG. 1 shown with a valve assembly in a closed position;
FIG. 3 is the view of FIG. 2 now shown with the valve assembly in an open position;
FIG. 4 is an axial end view of an outlet body of the fuel injector of FIG. 1;
FIG. 5 is an enlargement of a portion of FIG. 4 showing a 2-dimensional matrix of the outlet body;
FIGS. 6 and 7 are views of the fuel injector showing an initial orientation of the outlet body relative to a fuel injector body of the fuel injector and a predetermined orientation between the outlet body and the fuel injector body respectively;
FIG. 8 is a flow chart showing a method of manufacturing the fuel injector; and
FIG. 9 is a flow chart showing an alternative method of manufacturing the fuel injector.

### DETAILED DESCRIPTION OF INVENTION

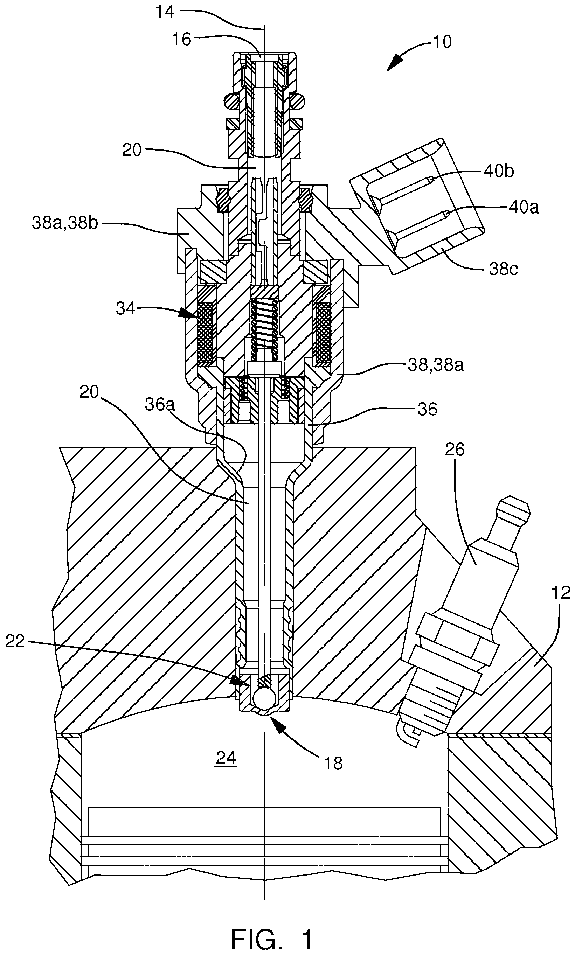

In accordance with a preferred embodiment of this invention and referring to FIG. 1, a fuel injector 10 is shown for supplying fuel to a fuel consuming device which is illustrated as an internal combustion engine 12. Fuel injector 10 extends along a fuel injector axis 14 and includes a fuel inlet 16 which communicates fuel into fuel injector 10, an outlet 18 which dispenses fuel from fuel injector 10, a conduit 20 for communicating fuel from fuel inlet 16 to outlet 18, and a valve assembly 22 for selectively preventing and permitting fuel from exiting outlet 18. Outlet 18 may be disposed within a combustion chamber 24 of internal combustion engine 12 for injection of fuel directly within combustion chamber 24 where the fuel is ignited, for example, by a spark plug 26. It should be noted that the location of fuel injector 10 and spark plug 26 relative to combustion chamber 24 as shown in the figures is for illustrative purposes only and the location of fuel injector 10 and/or spark plug 26 relative to combustion chamber 24 may be vary according to engine design.

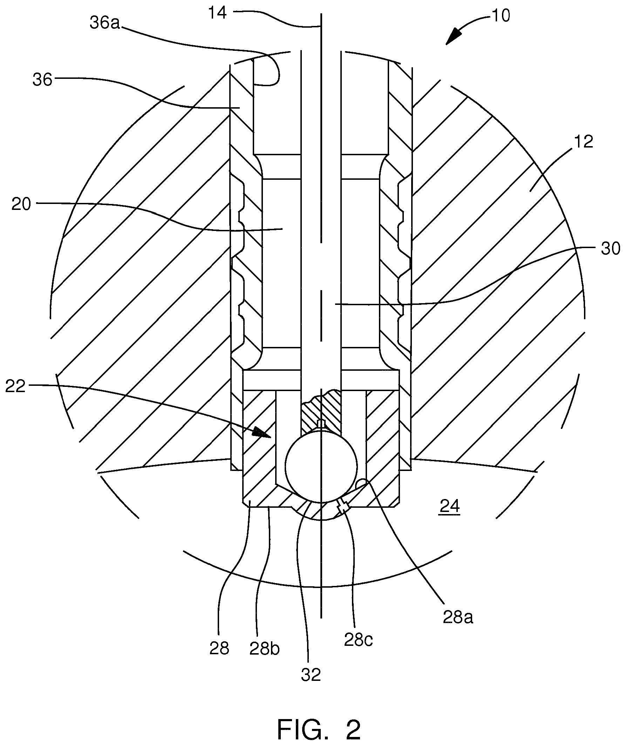

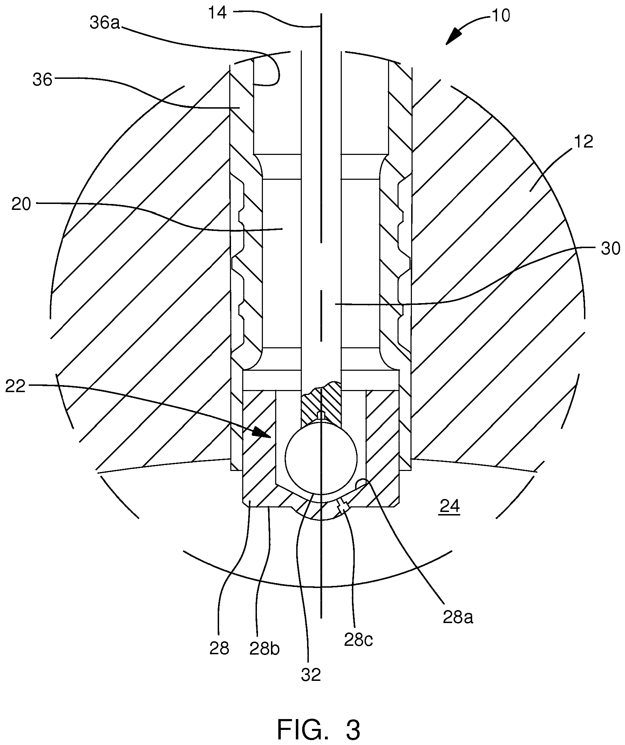

With continued reference to FIG. 1 and with additional reference to FIGS. 2 and 3 which are each an enlarged view of a portion of FIG. 1, valve assembly 22 includes an body, illustrated herein as a valve seat 28 which may be substantially cup-shaped as shown and is made of metal, for example, stainless steel. Valve seat 28 is centered about fuel injector axis 14 and includes an upstream surface 28a, a downstream surface 28b, and outlet 18 which may comprise one or more an outlet apertures 28c fluidly connecting upstream surface 28a and downstream surface 28b. Valve assembly 22 also includes a valve member 30 which is coaxial with valve seat 28 and which defines a valve member seating surface 32 at one end of valve member 30. Valve member 30, and consequently valve member seating surface 32, is reciprocated along fuel injector axis 14 within conduit 20 by an actuator which is illustrated as solenoid 34. Reciprocation of valve member 30 causes valve member seating surface 32 to selectively seat and unseat with valve seat 28 for selectively preventing and permitting fuel flow out of outlet 18. As illustrated in FIG. 2, valve member 30 is shown in a closed position in which fluid communication from fuel inlet 16 to outlet apertures 28c is prevented. Conversely, as illustrated in FIG. 3, valve member 30 is shown in an open position in which fluid communication is proved from fuel inlet 16 to outlet apertures 28c. Actuators for reciprocating a valve member of a fuel injector are well known to those skilled in the art of fuel injectors, consequently, solenoid 34 will not be discussed further herein.

Valve seat 28 is fixed, for example by welding or interference fit, to one end of a fuel injector housing 36 which is made of metal, for example, stainless steel. Fuel injector housing 36 is hollow and includes a fuel injector housing bore 36a extending therethrough such that fuel injector housing bore 36a is centered about, and extends along, fuel injector axis 14 such that a portion of valve seat 28 is received within fuel injector housing bore 36a and such that valve member 30 extends into fuel injector housing bore 36a. The end of fuel injector housing 36 which is opposite from valve seat 28 is fixed to a fuel injector body 38 which may comprise a fuel injector body first portion 38a and a fuel injector body second portion 38b which enclose solenoid 34. Fuel injector body first portion 38a is made of metal and is fixed directly to fuel injector housing 36, for example by welding or interference fit. Fuel injector body first portion 38a is centered about, and extends along fuel injector axis 14. Fuel injector body second portion 38b may be made of plastic which is formed and fixed to fuel injector body first portion 38a in a plastic injection molding operation which overmolds fuel injector body second portion 38b to fuel injector body first portion 38a. Fuel injector body second portion 38b may define an electrical connector 38c which includes electrical terminals 40a and 40b therein which are used to provide electricity to solenoid 34 in use through a complementary mating connector (not shown).

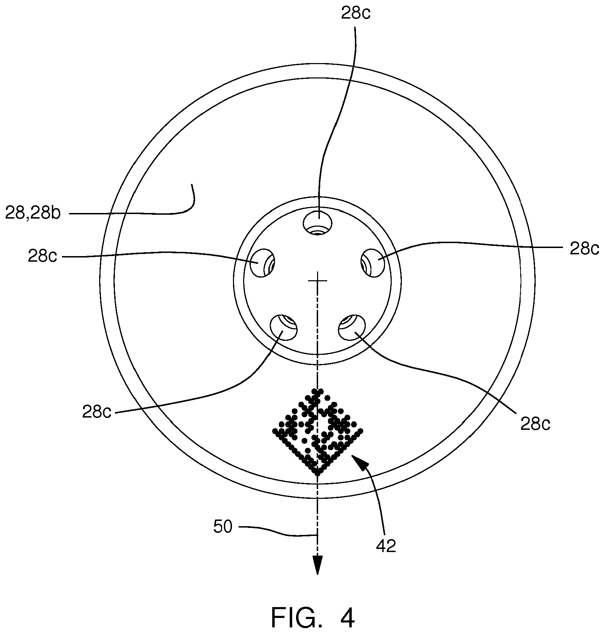

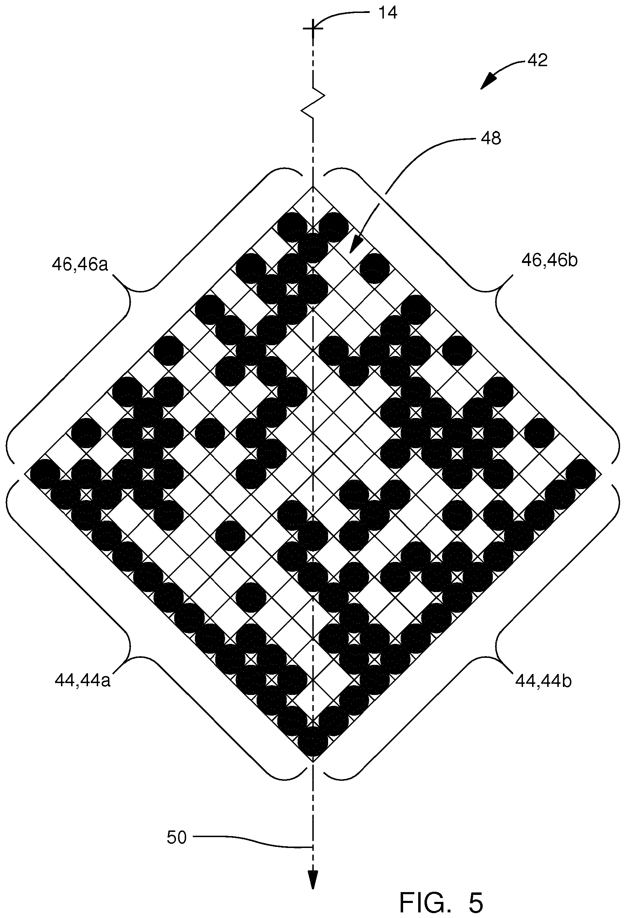

Now with particular reference to FIGS. 4 and 5, valve seat 28 includes a 2-dimensional matrix of cells 42 on downstream surface 28b where the cells are either populated or unpopulated which can be read by a scanner (not shown) which processes 2-dimensinal matrix of cells 42 in order to read the information that has been encoded in 2-dimensional matrix of cells 42 based on which cells are populated and which cells are unpopulated. 2-dimensional matrix of cells 42 includes a perimeter defined at least in part by a finder pattern 44 having a first edge 44a with continuous populated cells and also having a second edge 44b with continuous populated cells adjacent to first edge 44a. First edge 44a and second edge 44b of finder pattern 44 together form a right angle. The perimeter is also defined at least in part by a timing pattern 46 having a third edge 46a with alternating populated cells and unpopulated cells and also having a fourth edge 46b with alternating populated cells and unpopulated cells adjacent to third edge 46a. Third edge 46a and fourth edge 46b of timing pattern 46 together form a right angle. Finder pattern 44 is used by the scanner to locate and orient 2-dimensinal matrix of cells 42 for reading of information provided by 2-dimensional matrix of cells 42 while timing pattern 46 is used by the scanner to provide a count of the number or rows and columns in 2-dimensinal matrix of cells 42. Within the perimeter defined by finder pattern 44 and timing pattern 46 is a field of unpopulated and populated cells 48 which represent bits of data which provide identifying information about one or more of valve seat 28 and fuel injector 10. By way of non-limiting example only, field of unpopulated and populated cells 48 may provide one or more of the following information: date of manufacture, time of manufacture, serial number, part number, identifying information about the machine used to manufacture valve seat 28, style identification, and the like. While 2-dimensinal matrix of cells 42 has been illustrated as having 14 rows and 14 columns, including the rows and columns which are used for finder pattern 44 and timing pattern 46, it should be understood that the number of rows and columns may be selected to accommodate the particular information that 2-dimensinal matrix of cells 42 needs to represent. Furthermore, while field of unpopulated and populated cells 48 has been illustrated with a particular pattern of unpopulated and populated cells, it should be understood that this pattern has been provided for illustrative purposes only. It should be noted that FIG. 5 has been shown with grid lines in order to help visualize the rows and columns, however, it should be understood that these grid lines need not be provided in actual use. While one particular style of matrix has been described with regard to 2-dimensinal matrix of cells 42, it should be understood that other styles may be used, and may be, by way of non-limiting example only, a QR-Code.

It may be desirable to provided outlet apertures 28c in a particular orientation within combustion chamber 24 with respect to fuel injector axis 14 such that a resulting spray pattern/shape from fuel injector 10 is provided within combustion chamber 24 which may be important for desirable combustion of the fuel. Furthermore, the orientation of outlet apertures 28c within combustion chamber 24 may be dictated by interaction between geometries of fuel injector body 38 and internal combustion engine 12. Consequently, it is imperative to properly orient valve seat 28 to a predetermined orientation with fuel injector body 38 during manufacture of fuel injector 10 in order for proper orientation of outlet apertures 28c about fuel injector axis 14 within combustion chamber 24. In order to do so, 2-dimensinal matrix of cells 42 is not only used in the customary manner of storing data, but also as an orientation feature during manufacture of fuel injector 10 to orient valve seat 28 relative to fuel injector body 38 as will be described in greater detail in the paragraphs that follow.

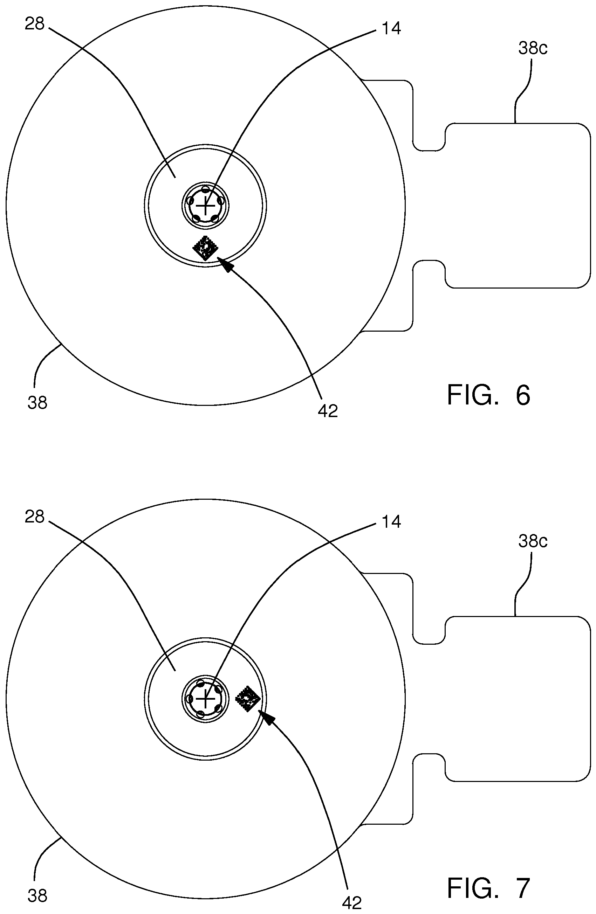

Now with additional reference to FIGS. 6-8, in a first step 100 for using 2-dimensinal matrix of cells 42 to orient valve seat 28 relative to fuel injector body 38, 2-dimensinal matrix of cells 42 is applied to downstream surface 28b, by way of non-limiting example only, by laser etching using a laser (not shown), in a predetermined relationship relative to outlet apertures 28c. It should be noted that the laser used to apply 2-dimensional matrix of cells 42 may be the same laser used in the formation of outlet apertures 28c. As shown, it may be preferable to orient 2-dimensinal matrix of cells 42 such that an imaginary ray 50 extending outward from fuel injector axis 14 bisects the right angle formed by first edge 44a and second edge 44b of finder pattern 44. Furthermore, 2-dimensinal matrix of cells 42 is preferably oriented such that the intersection of first edge 44a and second edge 44b of finder pattern 44 is distal from fuel injector axis 14 while the intersection of third edge 46a and fourth edge 46b of timing pattern 46 is proximal to fuel injector axis 14, consequently, finder pattern 44 acts as an arrowhead in which the vertex converges at a point which is to be used to orient valve seat 28 relative to fuel injector body 38 about fuel injector axis 14.

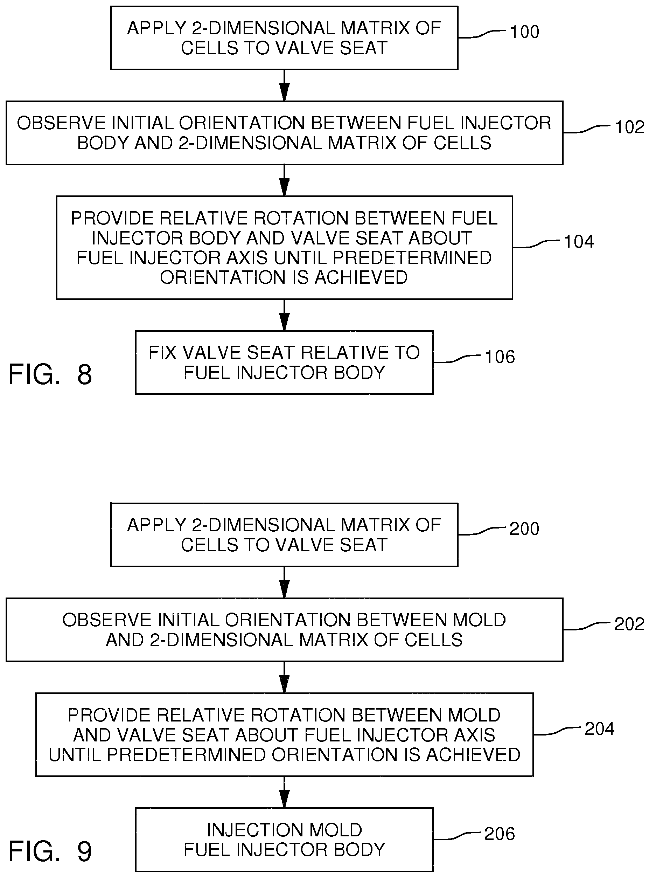

After 2-dimensinal matrix of cells 42 is applied to downstream surface 28b in a predetermined relationship relative to outlet apertures 28c, 2-dimensinal matrix of cells 42 is ready to be used to orient valve seat 28 relative to fuel injector body 38. When fuel injector 10 is being assembled, fuel injector housing 36, and consequently, valve seat 28 is initially able to be rotated relative to fuel injector body 38 about fuel injector axis 14. Consequently, an initial orientation of 2-dimensinal matrix of cells 42, and preferably an initial orientation of finder pattern 44, relative to fuel injector body 38 is observed as shown in FIG. 6 and as represented in step 102 of FIG. 8. Any fixed feature of fuel injector body 38 may be used as a reference when observing the initial orientation of 2-dimensinal matrix of cells 42 relative to fuel injector body 38, however, by way of non-limiting example only, electrical connector 38c may be used as a reference to observe the initial orientation of the initial orientation of 2-dimensinal matrix of cells 42 relative to fuel injector body 38. Observation of the initial position of 2-dimensinal matrix of cells 42 may be accomplished with the human eye, but is preferably accomplished with one or more cameras, scanners, or similar optical devices (not shown) connected to a computer or similar electronic data processing device (not shown). After observing the initial position of 2-dimensinal matrix of cells 42, relative to fuel injector body 38, relative rotation between fuel injector housing 36/valve seat 28 and fuel injector body 38 is provided about fuel injector axis 14. This relative rotation may be provided by human manipulation, but is preferably provided by machinery, for example a rotating chuck (not shown) which rotates fuel injector housing 36/valve seat 28 about fuel injector axis 14 relative to fuel injector body 38 which is held stationary in a fixture (not shown). Relative rotation is provided until a predetermined orientation between valve seat 28 and fuel injector body 38 is achieved based 2-dimensinal matrix of cells 42 relative to fuel injector body 38, and preferably based on finder pattern 44 relative to fuel injector body 38 as shown in FIG. 7 and as represented by step 104 in FIG. 8. The rotating chuck is preferably connected to, and controlled by, the same computer or similar electronic data processing device as the one or more cameras such that the computer or similar electronic data processing device is able to determine the amount of rotation that is needed in order to achieve the predetermined orientation between valve seat 28 and fuel injector body 38.

After the predetermined orientation between valve seat 28 and fuel injector body 38 is achieved, valve seat 28 is fixed relative to fuel injector body 38 in order to maintain the predetermined orientation between valve seat 28 and fuel injector body 38 as represented by step 106 in FIG. 8. This may be accomplished, for example, by welding fuel injector body first portion 38a to fuel injector housing 36 where fuel injector body first portion 38a meets fuel injector housing 36.

In an alternative method of manufacturing fuel injector 10, fuel injector body second portion 38b may be formed in an injection molding operation simultaneously with orienting valve seat 28 relative to fuel injector body 38. When this approach is used, a method as shown in FIG. 9 may be used. In step 200, 2-dimensinal matrix of cells 42 is applied to downstream surface 28b in a predetermined relationship relative to outlet apertures 28c just as in step 100 described previously. Next, in step 202, an initial orientation of 2-dimensinal matrix of cells 42, and preferably an initial orientation of finder pattern 44, relative to a mold (not shown) for injection molding fuel injector body 38 is observed in similar manner as was described relative to step 102. Following step 202, relative rotation between fuel injector housing 36/valve seat 28 and the mold is provided about fuel injector axis 14 until a predetermined orientation between valve seat 28 and the mold is achieved based 2-dimensinal matrix of cells 42 relative to the mold as shown in step 204. Next, in step 206, melted plastic is injected into the mold to form fuel injector body second portion 38b in the predetermined orientation between valve seat 28 and the fuel injector body 38. In this way, 2-dimensinal matrix of cells 42 is used to orient valve seat 28 relative to fuel injector body 38.

While this invention has been described in terms of the preferred embodiments thereof, it is not intended to be so limited, but rather only to the extent set forth in the claims that follow.

## Claims

1. A method of manufacturing a fuel injector (10) for supplying fuel to a fuel consuming device, said fuel injector (10) having a fuel inlet (16) which communicates fuel into said fuel injector (10); a fuel injector body (38); an outlet body (28) having an upstream surface (28a), a downstream surface (28b), and an outlet aperture (28c) fluidly connecting said upstream surface (28a) to said downstream surface (28b); and a valve assembly (22) downstream of said fuel inlet (16) and upstream of said outlet aperture (28c) such that said valve assembly (22) is moveable along an axis (14) between 1) a closed position in which fluid communication is prevented from said fuel inlet (16) to said outlet aperture (28c) and 2) an open position in which fluid communication is provided from said fuel inlet (16) to said outlet aperture (28c);
**characterized in that** said outlet body (28) includes a 2-dimensional matrix of cells (42) on said downstream surface (28b), said 2-dimensional matrix of cells (42) comprising a finder pattern (44), a timing pattern (46), and a field of unpopulated and populated cells (48) which represent bits of data, said method comprising:
using said 2-dimensional matrix of cells (42) to orient said outlet body (28) relative to said fuel injector body (38) and wherein:
said finder pattern (44) includes a first edge (44a) with continuous populated cells and a second edge (44b) with continuous populated cells adjacent to said first edge (44a) such that said first edge (44a) and said second edge (44b) form a right angle;
said timing pattern (46) includes a third edge (46a) with alternating populated cells and unpopulated cells and a fourth edge (46b) with alternating populated cells and unpopulated cells adjacent to said third edge (46a) such that said third edge (46a) and said fourth edge (46b) form a right angle; and
said field of unpopulated and populated cells (48) is within a perimeter defined by said finder pattern (44) and by said timing pattern (46) and ,
wherein using said 2-dimensional matrix of cells (42) to orient said outlet body (28) relative to said fuel injector body (38) comprises:
providing said 2-dimensional matrix of cells (42) on said outlet body (28) in a predetermined relationship relative to said outlet aperture (28c).

2. A method as in claim 1, wherein using said 2-dimensional matrix of cells (42) to orient said outlet body (28) relative to said fuel injector body (38) further comprises using said finder pattern (44) to orient said outlet body (28) relative to said fuel injector body (38).

3. A method as in claim 2, wherein using said finder pattern (44) to orient said outlet body (28) relative to said fuel injector body (38) comprises the steps of:
i) observing an initial position of said finder pattern (44) relative to said fuel injector body (38);
ii) providing relative rotation between said fuel injector body (38) and said outlet body (28) about said axis (14) after step i) until a predetermined orientation between said outlet body (28) and said fuel injector body (38) is achieved based on said finder pattern (44) relative to said fuel injector body (38).

4. A method as in claim 3, further comprising the step of:
iii) fixing said outlet body (28) and said fuel injector body (38) relative to each other after step ii) to maintain said fuel injector body (38) and said outlet body (28) in said predetermined orientation.

5. A method as in claim 1, wherein an imaginary ray (50) extending outward from said axis (14) bisects said right angle formed by said first edge (44a) and said second edge (44b).

6. A method as in claim 5, wherein said outlet aperture (28c) is eccentric to said axis (14).

7. A method as in claim 3, further comprising the step of:
iii) fixing said outlet body (28) and said fuel injector body (38) relative to each other after step ii) to maintain said fuel injector body (38) and said outlet body (28) in said predetermined orientation.

8. A method as in claim 7, wherein an imaginary ray (50) extending outward from said axis (14) bisects said timing pattern (46).

9. A method as in claim 1, wherein said outlet aperture (28c) is eccentric to said axis (14).

10. A method as in claim 1, wherein using said 2-dimensional matrix of cells (42) to orient said outlet body (28) relative to said fuel injector body (38) comprises the steps of:
i) observing an initial position of said 2-dimensional matrix of cells (42) relative to said fuel injector body (38);
ii) providing relative rotation between said fuel injector body (38) and said outlet body (28) about said axis (14) after step i) until a predetermined orientation between said outlet body (28) and said fuel injector body (38) is achieved based on said 2-dimensional matrix of cells (42) relative to said fuel injector body (38).

## Patentansprüche

1. Verfahren zum Herstellen einer Kraftstoffeinspritzdüse (10) zum Zuführen von Kraftstoff zu einer Kraftstoffverbrauchsvorrichtung, wobei die Kraftstoffeinspritzdüse (10) einen Kraftstoffeinlass (16) aufweist, der Kraftstoff in die Kraftstoffeinspritzdüse (10) leitet; einen Kraftstoffeinspritzdüsenkörper (38); einen Auslasskörper (28), der eine stromaufwärtige Oberfläche (28a), eine stromabwärtige Oberfläche (28b) und eine Auslassöffnung (28c), die die stromaufwärtige Oberfläche (28a) mit der stromabwärtigen Oberfläche (28b) fluidisch verbindet; und eine Ventilanordnung (22) stromabwärts des Kraftstoffeinlasses (16) und stromaufwärts der Auslassöffnung (28c) derart aufweist, dass die Ventilanordnung (22) entlang einer Achse (14) zwischen 1) einer geschlossenen Position, in der eine Fluidverbindung von dem Kraftstoffeinlass (16) zu der Auslassöffnung (28c) verhindert wird, und 2) einer offenen Position, in der eine Fluidverbindung von dem Kraftstoffeinlass (16) zu der Auslassöffnung (28c) bereitgestellt wird, bewegbar ist;
**dadurch gekennzeichnet, dass** der Auslasskörper (28) eine 2-dimensionale Matrix von Zellen (42) auf der stromabwärts-Oberfläche (28b) beinhaltet, die 2-dimensionale Matrix von Zellen (42) umfassend ein Finder-Pattern (44), ein Timing-Pattern (46) und ein Feld von unbestückten und bestückten Zellen (48), die Bits von Daten darstellen, das Verfahren umfassend:
Verwenden der 2-dimensionalen Matrix von Zellen (42), um den Auslasskörper (28) relativ zu dem Kraftstoffeinspritzdüsenkörper (38) auszurichten, und wobei:
das Finder-Pattern (44) eine erste Kante (44a) mit fortlaufend bestückten Zellen und eine zweite Kante (44b) mit fortlaufend bestückten Zellen angrenzend zu der ersten Kante (44a) derart beinhaltet, dass die erste Kante (44a) und die zweite Kante (44b) einen rechten Winkel ausbilden;
das Timing-Pattern (46) eine dritte Kante (46a) mit abwechselnd bestückten Zellen und unbestückten Zellen und eine vierte Kante (46b) mit abwechselnd bestückten Zellen und unbestückten Zellen angrenzend zu der dritten Kante (46a) derart beinhaltet, dass die dritte Kante (46a) und die vierte Kante (46b) einen rechten Winkel ausbilden; und
das Feld unbestückter und bestückter Zellen (48) innerhalb eines Umfangs liegt, der durch das Finder-Pattern (44) und durch das Timing-Pattern (46) definiert ist, und,
wobei das Verwenden der 2-dimensionalen Matrix von Zellen (42) zum Ausrichten des Auslasskörpers (28) relativ zu dem Kraftstoffeinspritzdüsenkörper (38) umfasst:
Bereitstellen der 2-dimensionalen Matrix von Zellen (42) auf dem Auslasskörper (28) in einer zuvor bestimmten Beziehung relativ zu der Auslassöffnung (28c).

2. Verfahren nach Anspruch 1, wobei das Verwenden der 2-dimensionalen Matrix von Zellen (42), um den Auslasskörper (28) relativ zu dem Kraftstoffeinspritzdüsenkörper (38) auszurichten, ferner das Verwenden des Finder-Patterns (44) umfasst, um den Auslasskörper (28) relativ zu dem Kraftstoffeinspritzdüsenkörper (38) auszurichten.

3. Verfahren nach Anspruch 2, wobei das Verwenden des Finder-Patterns (44), um den Auslasskörper (28) relativ zu dem Kraftstoffeinspritzdüsenkörper (38) auszurichten, die Schritte umfasst von:
i) Beobachten einer Anfangsposition des Finder-Patterns (44) relativ zu dem Kraftstoffeinspritzdüsenkörper (38);
ii) Bereitstellen einer relativen Drehung zwischen dem Kraftstoffeinspritzdüsenkörper (38) und dem Auslasskörper (28) um die Achse (14) herum nach Schritt i), bis eine zuvor bestimmte Ausrichtung zwischen dem Auslasskörper (28) und dem Kraftstoffeinspritzdüsenkörper (38) basierend auf dem Finder-Pattern (44) relativ zu dem Kraftstoffeinspritzdüsenkörper (38) erreicht ist.

4. Verfahren nach Anspruch 3, ferner umfassend den Schritt:
iii) Fixieren des Auslasskörpers (28) und des Kraftstoffeinspritzdüsenkörpers (38) relativ zueinander nach Schritt ii), um den Kraftstoffeinspritzdüsenkörper (38) und den Auslasskörper (28) in der zuvor bestimmten Ausrichtung aufrechtzuerhalten.

5. Verfahren nach Anspruch 1, wobei ein imaginärer Strahl (50), der sich von der Achse (14) nach außen erstreckt, den durch die erste Kante (44a) und die zweite Kante (44b) gebildeten rechten Winkel halbiert.

6. Verfahren nach Anspruch 5, wobei die Auslassöffnung (28c) exzentrisch zu der Achse (14) ist.

7. Verfahren nach Anspruch 3, ferner umfassend den Schritt von:
iii) Fixieren des Auslasskörpers (28) und des Kraftstoffeinspritzdüsenkörpers (38) relativ zueinander nach Schritt ii), um den Kraftstoffeinspritzdüsenkörper (38) und den Auslasskörper (28) in der zuvor bestimmten Ausrichtung aufrechtzuerhalten.

8. Verfahren nach Anspruch 7, wobei ein imaginärer Strahl (50), der sich von der Achse (14) nach außen erstreckt, das Timing-Pattern (46) halbiert.

9. Verfahren nach Anspruch 1, wobei die Auslassöffnung (28c) exzentrisch zu der Achse (14) ist.

10. Verfahren nach Anspruch 1, wobei das Verwenden der 2-dimensionalen Matrix von Zellen (42), um den Auslasskörper (28) relativ zu dem Kraftstoffeinspritzdüsenkörper (38) auszurichten, die Schritte umfasst:
i) Beobachten einer Anfangsposition der 2-dimensionalen Matrix von Zellen (42) relativ zu dem Kraftstoffeinspritzdüsenkörper (38);
ii) Bereitstellen einer relativen Drehung zwischen dem Kraftstoffeinspritzdüsenkörper (38) und dem Auslasskörper (28) um die Achse (14) herum nach Schritt i), bis eine zuvor bestimmte Ausrichtung zwischen dem Auslasskörper (28) und dem Kraftstoffeinspritzdüsenkörper (38) basierend auf der 2-dimensionalen Matrix von Zellen (42) relativ zu dem Kraftstoffeinspritzdüsenkörper (38) erreicht ist.

## Revendications

1. Procédé de fabrication d'un injecteur de carburant (10) destiné à l'approvisionnement de carburant à un dispositif de consommation de carburant, ledit injecteur de carburant (10) ayant une entrée de carburant (16) qui communique du carburant dans ledit injecteur de carburant (10) ; un corps d'injecteur de carburant (38) ; un corps de sortie (28) ayant une surface amont (28a), une surface aval (28b) et une ouverture de sortie (28c) reliant fluidiquement ladite surface amont (28a) à ladite surface aval (28b) ; et un ensemble soupape (22) en aval de ladite entrée de carburant (16) et en amont de ladite ouverture de sortie (28c) de telle sorte que ledit ensemble soupape (22) est mobile le long d'un axe (14) entre 1) une position fermée dans laquelle une communication fluidique est empêchée de ladite entrée de carburant (16) à ladite ouverture de sortie (28c) et 2) une position ouverte dans laquelle une communication fluidique est fournie de ladite entrée de carburant (16) à ladite ouverture de sortie (28c) ;
**caractérisé en ce que** ledit corps de sortie (28) comporte une matrice bidimensionnelle de cellules (42) sur ladite surface aval (28b), ladite matrice bidimensionnelle de cellules (42) comprenant un motif de recherche (44), un motif de synchronisation (46) et un champ de cellules peuplées et non peuplées (48) qui représentent des bits de données, ledit procédé comprenant :
l'utilisation de ladite matrice bidimensionnelle de cellules (42) pour orienter ledit corps de sortie (28) par rapport audit corps d'injecteur de carburant (38) et :
ledit motif de recherche (44) comportant un premier bord (44a) avec des cellules peuplées continues et un deuxième bord (44b) avec des cellules peuplées continues à proximité dudit premier bord (44a) de telle sorte que ledit premier bord (44a) et ledit deuxième bord (44b) forment un angle droit ;
ledit motif de synchronisation (46) comportant un troisième bord (46a) avec des cellules peuplées et des cellules non peuplées en alternance et un quatrième bord (46b) avec des cellules peuplées et des cellules non peuplées en alternance à proximité dudit troisième bord (46a) de telle sorte que ledit troisième bord (46a) et ledit quatrième bord (46b) forment un angle droit ; et
ledit champ de cellules peuplées et non peuplées (48) se trouvant dans les limites d'un périmètre défini par ledit motif de recherche (44) et par ledit motif de synchronisation (46) et,
l'utilisation de ladite matrice bidimensionnelle de cellules (42) pour orienter ledit corps de sortie (28) par rapport audit corps d'injecteur de carburant (38) comprenant :
la fourniture de ladite matrice bidimensionnelle de cellules (42) sur ledit corps de sortie (28) dans une relation prédéterminée par rapport à ladite ouverture de sortie (28c).

2. Procédé selon la revendication 1, l'utilisation de ladite matrice bidimensionnelle de cellules (42) pour orienter ledit corps de sortie (28) par rapport audit corps d'injecteur de carburant (38) comprenant en outre l'utilisation dudit motif de recherche (44) pour orienter ledit corps de sortie (28) par rapport audit corps d'injecteur de carburant (38).

3. Procédé selon la revendication 2, l'utilisation dudit motif de recherche (44) pour orienter ledit corps de sortie (28) par rapport audit corps d'injecteur de carburant (38) comprenant les étapes suivantes :
i) l'observation d'une position initiale dudit motif de recherche (44) par rapport audit corps d'injecteur de carburant (38) ;
ii) la fourniture d'une rotation relative entre ledit corps d'injecteur de carburant (38) et ledit corps de sortie (28) autour dudit axe (14) après l'étape i) jusqu'à ce qu'une orientation prédéterminée entre ledit corps de sortie (28) et ledit corps d'injecteur de carburant (38) soit obtenue sur la base sur dudit motif de recherche (44) par rapport audit corps d'injecteur de carburant (38).

4. Procédé selon la revendication 3, comprenant en outre l'étape suivante :
iii) la fixation dudit corps de sortie (28) et dudit corps d'injecteur de carburant (38) l'un par rapport à l'autre après l'étape ii) pour maintenir ledit corps d'injecteur de carburant (38) et ledit corps de sortie (28) dans ladite orientation prédéterminée.

5. Procédé selon la revendication 1, un rayon imaginaire (50) s'étendant vers l'extérieur depuis ledit axe (14) coupant en deux ledit angle droit formé par ledit premier bord (44a) et ledit deuxième bord (44b).

6. Procédé selon la revendication 5, ladite ouverture de sortie (28c) étant excentrée par rapport audit axe (14).

7. Procédé selon la revendication 3, comprenant en outre l'étape suivante :
iii) la fixation dudit corps de sortie (28) et dudit corps d'injecteur de carburant (38) l'un par rapport à l'autre après l'étape ii) pour maintenir ledit corps d'injecteur de carburant (38) et ledit corps de sortie (28) dans ladite orientation prédéterminée.

8. Procédé selon la revendication 7, un rayon imaginaire (50) s'étendant vers l'extérieur dudit axe (14) coupant en deux ledit motif de synchronisation (46).

9. Procédé selon la revendication 1, ladite ouverture de sortie (28c) étant excentrée par rapport audit axe (14).

10. Procédé selon la revendication 1, l'utilisation de ladite matrice bidimensionnelle de cellules (42) pour orienter ledit corps de sortie (28) par rapport audit corps d'injecteur de carburant (38) comprenant les étapes suivantes :
i) l'observation d'une position initiale de ladite matrice bidimensionnelle de cellules (42) par rapport audit corps d'injecteur de carburant (38) ;
ii) la fourniture d'une rotation relative entre ledit corps d'injecteur de carburant (38) et ledit corps de sortie (28) autour dudit axe (14) après l'étape i) jusqu'à ce qu'une orientation prédéterminée entre ledit corps de sortie (28) et ledit corps d'injecteur de carburant (38) soit obtenue sur la base de ladite matrice bidimensionnelle de cellules (42) par rapport audit corps d'injecteur de carburant (38).
